(19) Europäisches Patentamt
European Patent Office
Office européen des brevets

(11) EP 0 787 829 A1

(12) DEMANDE DE BREVET EUROPEEN

(43) Date de publication:
06.08.1997 Bulletin 1997/32

(51) Int Cl.6: C23C 18/16, B01D 61/44

(21) Numéro de dépôt: 97400233.9

(22) Date de dépôt: 31.01.1997

(84) Etats contractants désignés:
AT BE CH DE DK ES FI FR GB GR IE IT LI LU MC NL PT SE

(30) Priorité: 02.02.1996 FR 9601310

(71) Demandeur: TREDI
75641 Paris Cédex 13 (FR)

(72) Inventeurs:
- Cohen, Thierry
94160 Saint-Mande (FR)
- Thauront, Jacques
92250 La Garenne Colombes (FR)
- Barioulet, Stéphane
68100 Mulhouse (FR)
- Fahrasmane, Alain
28130 Bouglainval (FR)
- Bernard, Michel
78180 Montigny-le-Bretonneux (FR)

(74) Mandataire: Desaix, Anne et al
Ernest Gutmann - Yves Plasseraud S.A.
3, rue Chauveau-Lagarde
75008 Paris (FR)

# (54) Procédé pour la régénération d'un bain de nickel usé pour le revêtement de pièces Métalliques

(57) L'invention concerne un procédé de régénération d'un bain de nickel usé contenant des composés anioniques et des composés cationiques notamment des orthophosphites $H_2PO_3^-$, des hypophosphites $H_2PO_2^-$, et des ions $Ni^{2+}$ caractérisé en ce qu'il comprend,

une première phase de séparation de composés au cours de laquelle une quantité substantielle des composés anioniques en solution dans ledit bain est séparée des composés cationiques dans des conditions permettant en outre le maintien en solution d'une quantité optimale d'ions $Ni^{2+}$,

une deuxième phase de séparation de composés au cours de laquelle une quantité substantielle des composés anioniques monovalents, compris dans les composés anioniques séparés des composés cationiques lors de la première phase du procédé, est séparée des composés anioniques plurivalents par la création d'une différence de valence entre ces composés, particulièrement par l'application d'un pH permettant de créer cette différence de valence.

FIGURE 1

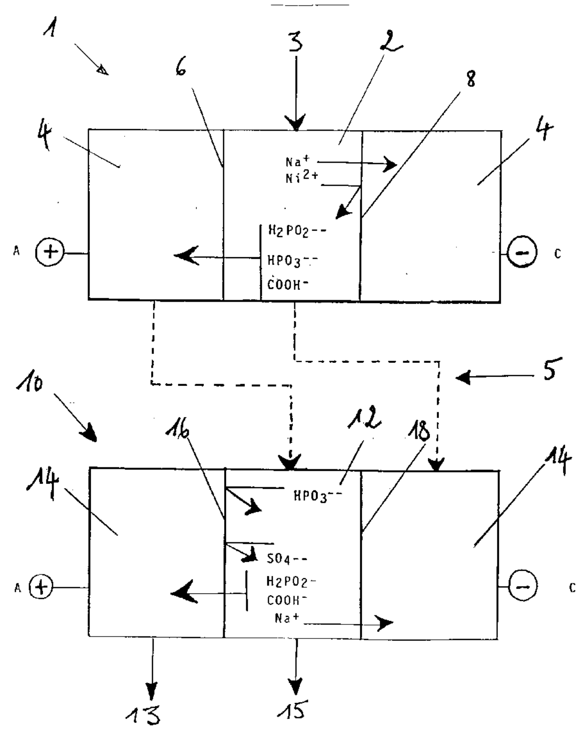


EP 0 787 829 A1

## Description

La présente invention concerne un procédé et un dispositif pour la régénération d'un bain de nickel chimique usé destiné aux revêtements de pièces métalliques, des composés hypophosphites étant utilisés comme agents de réduction du nickel.

Dans le domaine des traitements de surface, on utilise des techniques de revêtement permettant, suite à une réduction chimique au moyen d'un agent de réduction approprié, le dépôt d'ions métalliques non ferreux. Dans le cas du nickel, il est connu que l'hypophosphite est un agent de réduction approprié. On a donc développé un procédé de nickelage chimique par trempage des pièces métalliques dans des bains de chlorure de nickel additionnés d'ions hypophosphites. Les ions $Ni^{2+}$ y sont réduits en nickel métallique tandis que les hypophosphites sont oxydés en orthophosphites suivant la réaction :

$$Ni^{2+} + H_2PO_2^- + H_2O \rightarrow Ni + H_2PO_3^{--} + 2H^+$$

Il est probable que cette réaction chimique globale résulte de la superposition de deux réactions élétrochimiques suivantes :

$$Ni^{2+} + 2e^- \text{ ---------> } Ni \text{ (réduction)}$$

$$H_2PO_2^- + H_2O \text{ ---------> } H_2PO_3^{--} + 2H^+ + 2e^- \text{ (Oxydation)}$$

$$\overline{Ni^{2+} + H_2PO_2^- + H_2O \text{ ---------> } Ni + H_2PO_3^{--} + 2H^+}$$

Ainsi, les hypophosphites réduisent le nickel ionique $Ni^{2+}$ et le nickel métal se dépose alors sur les pièces à traiter. Parallèlement, on assiste à une formation progressive d'ions orthophosphites $H_2PO_3^{--}$ dans le milieu.

Lorsque la solution contient un large excès d'orthophosphite, c'est la réduction de l'orthophosphite en hypophosphite qui dès lors l'emporte. Ceci a pour conséquence que la réduction du nickel chimique en nickel métal ne peut plus avoir lieu ou bien à des rendements extrêmement faibles.

En théorie, la durée de vie d'un bain de nickel chimique s'évalue en nombre de cycles de nickelage chimique ou en nombre de "MTO" ("Metal Turn-Over" sachant qu'un cycle de nickelage chimique est défini par le nombre de passages du bain de revêtement sur la pièce que l'on veut traiter. On considère qu'un bain de revêtement a pratiquement perdu la majeure partie de son efficacité lorsqu'il atteint 10 MTO. En effet, à ce stade, la concentration en orthophosphites est trop importante - on peut l'estimer à environ 300 grammes par litre - et le phénomène de nickelage se fait dans de mauvaises conditions, la qualité de ce nickelage étant en outre relativement mauvaise.

L'objectif de la présente invention est de remédier à ces problèmes en proposant un nouveau procédé permettant la régénération d'un bain de nickel chimique usé, dans lequel les pertes en nickel et en hypophosphites ont été considérablement réduites notamment grâce à l'extraction ou l'élimination progressive des orthophosphites du milieu. Un dispositif pour la régénération du bain de nickel usé mettant en oeuvre le procédé selon la présente invention sera également décrit ci-après.

La présente invention concerne donc un procédé de régénération d'un bain de nickel chimique usé contenant des composés anioniques et des composés cationiques notamment des orthophosphites $H_2PO_3^{--}$, des hypophosphites $H_2PO_2^-$, et des ions $Ni^{2+}$. Ce procédé comprend une première phase de séparation au cours de laquelle une quantité substantielle des composés anioniques en solution dans ledit bain est séparée des composés cationiques dans des conditions permettant en outre le maintien en solution d'une quantité optimale d'ions $Ni^{2+}$.

Ce procédé comprend en outre une deuxième phase de séparation au cours de laquelle une quantité substantielle des composés anioniques monovalents, compris dans les composés anioniques séparés des composés cationiques lors de la première phase du procédé sont séparés des composés anioniques plurivalents par la création d'une différence de valence entre ces composés, particulièrement par l'application d'un pH permettant de créer cette différence de valence.

Dans la présente invention, on cherche donc à séparer certains composés ioniques spécifiques, se différenciant les uns des autres notamment par leur type de charge, c'est à dire par le fait qu'ils soient des ions négatifs ou positifs, mais également par leur nombre de charge, c'est à dire la valence qui peut être unique ou multiple. Les principaux composés ioniques mis en jeu dans le cadre des traitements de pièces métalliques par nickelage sont, tel que ci-dessus mentionné, les orthophosphites, les hypophosphites et les ions $Ni^{2+}$.

Un tel procédé permet de résoudre les problèmes ci-dessus évoqués dans la mesure où la mise en oeuvre de deux phases distinctes de séparation permet d'une part, de confiner les composés cationiques en cherchant à conserver en particulier les ions $Ni^{2+}$ en solution, et d'autre part, dans le cadre de la deuxième phase de séparation, de récupérer les composés anioniques, et de séparer les composés anioniques monovalents des composés anioniques plurivalents comprenant notamment les orthophosphites. Le bilan des réactions régissant l'ensemble du procédé s'effectue avec une perte minimale dans chacun des principaux groupes de composés que l'on veut isoler, purifier et recycler, c'est à dire les hypophosphites et les ions $Ni^{2+}$ d'une part, et les orthophosphites d'autre part.

Dans une réalisation préférée du procédé de régénération selon l'invention, la première et/ou la deuxième phase de séparation comprend une phase d'électrodialyse mise en oeuvre par l'entremise d'au moins une cellule d'électrodialyse.

Dans cette réalisation, la mise en oeuvre des membranes échangeuses d'ions autorise une séparation particulièrement sélective des différents composés. De plus, lorsque chacune des séparations comprend une électrodialyse, on atteint alors des taux de séparation particulièrement élevés.

Plusieurs types de membranes échangeuses d'ions existent ou peuvent être fabriqués. Certaines de ces membranes permettent une séparation des composés cationiques des composés anioniques, quelque soit leur valence. D'autres membranes permettent, au sein de groupes de polarité identique, la séparation des composés monochargés des composés à charges multiples.

Ainsi, dans un procédé de régénération préféré de l'invention, la première phase de séparation comprend la mise en oeuvre d'au moins une cellule d'électrodialyse comprenant une membrane échangeuse d'anions, de sorte à permettre la séparation d'une quantité substantielle des composés ortho- et hypophosphites, sous forme prédominante monovalente, des ions $Ni^{2+}$.

En outre, la deuxième phase comprend la mise en oeuvre d'au moins une cellule d'électrodialyse comprenant une membrane échangeuse d'anions spécifique des ions monovalents, de sorte à permettre la séparation d'une quantité substantielle des composés hypophosphites, des composés plurivalents, notamment des orthophosphites sous forme prédominante divalente.

Ainsi, le procédé de régénération selon l'invention permet également lors de la deuxième phase, outre la séparation des orthophosphites des hypophosphites, la séparation de composés anioniques plurivalents autres, notamment les sulfates présents dans certains bains de nickel chimique usés. Ceci constitue un avantage supplémentaire au présent procédé dans la mesure où ces sulfates sont des composés indésirables pour la qualité du bain.

De préférence, chaque cellule d'électrodialyse mise en oeuvre dans la première phase de séparation comprend une membrane échangeuse de cations, spécifique des ions monovalents. En outre, chaque cellule d'électrodialyse mise en oeuvre dans la deuxième phase de séparation comprend une membrane échangeuse de cations.

Par ailleurs, le présent procédé de séparation des composés ioniques peut voir sa sélectivité ionique augmenter par l'application de conditions de séparation particulières de pH, de densité de courant, et de température.

Ainsi, dans une réalisation préférentielle d'un tel procédé, on applique, lors de la première électrodialyse, une densité de courant comprise dans l'intervalle allant de 20 à 60 mA par $cm^2$ de membranes échangeuses d'ions, de préférence 35, et une température sélectionnée dans l'intervalle allant de 20 à 40°C.

Lors de la première électrodialyse, la valeur du pH est de préférence inférieure à 8, et de préférence comprise entre 4 et 5.

Lors de la deuxième électrodialyse, on applique une densité de courant comprise dans l'intervalle allant de 20 à 60 mA par $cm^2$ de membranes échangeuses d'ions, de préférence 30, une température sélectionnée dans l'intervalle allant de 20 à 40 ° C et une valeur de pH comprise entre 9 et 9,5.

Le choix de telles valeurs de pH permet de se placer dans des conditions réactionnelles dans lesquelles les ions $Ni^{2+}$ sont conservés en solution. Dans la deuxième électrodialyse, la valeur du pH est choisie de façon à accentuer la différence de charge entre les composés anioniques à séparer. Par exemple, lorsqu'il s'agit de séparer les orthophosphites des hypophosphites, les orthophosphites sont doublement chargés lorsque la valeur du pH de la solution dans laquelle ils se trouvent est environ égale à 9. On peut cependant envisager une gamme de pH de 8 à 13 pour la deuxième électrodialyse.

Pour la mise en oeuvre d'un tel procédé, on peut concevoir des dispositifs comportant un nombre de cellules indéfini pour chacune des deux phases de séparation, sous réserve qu'on adapte les conditions expérimentales, notamment en ce qui concerne la densité de courant entre les deux électrodes.

Plus particulièrement, on peut utiliser un dispositif comprenant deux empilements de cellules d'électrodialyse, un pour chacune des deux phases de séparation, chacun desdits empilements étant relié à une anode et une cathode, chacune des cellules comprenant au moins une membrane échangeuse d'anions, et de préférence au moins une membrane échangeuse de cations située entre la cathode et ladite membrane échangeuse d'anions. La membrane échangeuse de cations de la première cellule d'électrodialyse est une membrane échangeuse de cations monovalents spécifique, la membrane échangeuse d'anions de la deuxième cellule d'électrodialyse étant une membrane échangeuse d'anions monovalents spécifique.

La conception d'un dispositif mettant en oeuvre le procédé selon l'invention requiert donc la préparation de cellules d'électrodialyse comportant un agencement particulier de membranes échangeuses d'ions du type anionique et/ou cationique, spécifiques des ions monovalents ou plurivalents. Par un tel agencement, et par la mise en oeuvre des conditions réactionnelles précédemment décrites, un objectif de la présente invention a été atteint en établissant au cours de la première électrodialyse une purification du nickel sous forme ionique $Ni^{2+}$ pour, dans le cadre de la deuxième électrodialyse, récupérer et purifier les hypophosphites ainsi que des acides organiques du type R $COO^-$.

Selon une autre réalisation de la présente invention, le procédé de régénération d'un bain de nickel chimique peut être mis en oeuvre en continu sans nécessiter le transfert de certains des composés obtenus suite à une première phase de séparation vers une deuxième phase de séparation.

Un tel procédé de régénération d'un bain de nickel chimique comprenant des composés anioniques, notamment des orthophosphites $H_2PO_3^{--}$, des hypophosphites $H_2PO_2^-$, et des composés cationiques, notamment des ions $Ni^{2+}$, est mis en oeuvre par l'introduction au fur et à mesure, dans le bain de nickel chimique en cours de régénération, des composés anioniques monovalents séparés lors de la deuxième phase de séparation des composés anioniques plurivalents, notamment les orthophosphites $H_2PO_3^{--}$.

De préférence, les composés anioniques monovalents sont séparés des composés anioniques plurivalents lors de la deuxième phase de séparation par l'application d'un pH compris entre 9 et 9,5.

De préférence encore, un tel procédé de régénération est mis en oeuvre jusqu'à l'obtention d'un nombre de MTO au moins égal à 3, de préférence 1 MTO.

Par ailleurs, ce procédé de régénération en continu est particulièrement mis en oeuvre par un dispositif comportant trois compartiments.

Dans un tel dispositif, un premier compartiment central est délimité par deux membranes échangeuses d'ions, l'une échangeuse d'anions, spécifique d'ions monovalents par rapport aux ions divalents, l'autre échangeuse de cations, spécifique des ions monovalents par rapport aux ions divalents. De part et d'autre du compartiment central deux compartiments sont prévus. Le premier est délimité par une anode et la membrane échangeuse d'anions spécifique d'ions monovalents, le deuxième étant délimité par une cathode et la membrane échangeuse de cations spécifique d'ions monovalents. Le compartiment délimité par la cathode et la membrane échangeuse de cations monovalents permet dans un premier temps de recevoir le bain usé à traiter et, par la suite, le bain de nickel chimique au fur et à mesure régénéré. En outre, le compartiment délimité par l'anode et la membrane échangeuse d'anions monovalents communique avec le compartiment délimité par la cathode et la membrane échangeuse de cations monovalents, de façon à ce que les composés anioniques monovalents, essentiellement les hypophosphites $H_2PO_2^-$ soient au fur et à mesure transférés du premier compartiment au deuxième. Enfin, au niveau du compartiment central, il est prévu de réaliser un traitement physico-chimique afin de détruire, entre autres les orthophosphites $H_2PO_3^{--}$ s'accumulant au cours du processus.

Bref descriptif des figures

La figure 1 est une représentation schématique d'une coupe transversale des deux types de cellules d'électrodialyse d'un dispositif pour la mise en oeuvre d'un procédé de régénération d'un bain de nickel chimique en mode discontinu.

La figure 2 est une représentation schématique d'une cellule d'électrodialyse d'un dispositif pour la mise en oeuvre d'un procédé de régénération d'un bain de nickel chimique en mode continu.

Sur ces deux figures, apparaît également le transfert des différents composés ioniques ci-dessus évoqués au travers des membranes échangeuses d'ions utilisées dans lesdites cellules d'électrodialyse.

La lettre « A » représente l'anode.

La lettre « C » représente la cathode.

Description détaillée.

Le procédé de séparation discontinu de la présente invention met en oeuvre un dispositif comprenant deux types de cellules d'électrodialyse (1) et (10), tel que cela est montré à la figure 1. Ce dispositif contient en outre des moyens d'introduction (3), de transfert (5) ou de récupération (13) et (15) des différentes solutions aux divers stades du procédé de régénération.

Le premier type de cellule d'électrodialyse (1), comporte un premier compartiment (2), un deuxième compartiment (4), une anode « A » et une cathode « C ». Deux membranes d'électrodialyse (6 et 8) séparent le compartiment (2) du compartiment (4). D'un côté, une première membrane (6) échangeuse d'anions, dénommée par la suite MEA, sépare le compartiment (2) du compartiment (4). D'un autre côté, une deuxième membrane (8), échangeuse de cations monovalents, dénommée par la suite MEC+, sépare le compartiment (2) du compartiment (4).

Le deuxième type de cellule d'électrodialyse (10), comporte un premier compartiment (12) et un deuxième compartiment (14), une anode « A » et une cathode « C ». Deux membranes d'électrodialyse (16 et 18) séparent le compartiment (12) du compartiment (14). D'un côté, une première membrane (16) échangeuse d'anions monovalents, dénommée par la suite MEA-, sépare le compartiment (12) du compartiment (14). D'un autre côté, une deuxième membrane (18), échangeuse de cations, dénommée par la suite MEC, sépare le compartiment (12) du compartiment (14).

Ainsi que précédemment mentionné, on peut concevoir des dispositifs comportant un nombre de cellules indéfini pour chacun des deux types(1) et (10) ci-dessus, sous réserve qu'on adapte les conditions expérimentales, notamment en ce qui concerne l'intensité de courant entre les deux électrodes.

Dans le procédé de régénération,on introduit dans le compartiment (2) un bain de nickel chimique usé comprenant essentiellement des ions hypophosphites $H_2PO_2^-$, des ions orthophosphites $HPO^{--}_3$, des ions $RCOO^-$, des ions $Ni^{2+}$ ainsi que des ions sodium $Na^+$.

Lors d'une première phase de séparation, les ions $H_2PO_2^{--}$, $HPO_3^{--}$, $RCOO^-$ d'une part, et $Na^+$ d'autre part, dont le mouvement est initié par l'application d'un champ électrique aux électrodes A et C, sont transférés du compartiment (2) vers le compartiment (4) par l'entremise respectivement des membranes MEA et MEC+. En effet, la membrane MEA permet de séparer les composés anioniques des composés cationiques, notamment les ions $Ni^{2+}$, par transfert sélectif de ces composés anioniques. Ainsi, les hypophosphites $H_2PO_2^{--}$, les orthophosphites $HPO_3^{--}$ et les ions $RCOO^-$ traversent ladite membrane sous l'effet notamment du champ électrique appliqué, et se retrouvent alors dans le compartiment (4). La membrane MEC+ permet elle de séparer les cations plurivalents, notamment les divalents, en particulier les ions $Ni^{2+}$, des cations monovalents par transfert sélectif de ces derniers.

A la fin de cette première phase de séparation, au cours de laquelle les composés anioniques sont séparés des composés cationiques plurivalents, notamment les divalents, plus de 90 % des ions nickel $Ni^{2+}$ restent dans le compartiment (2), alors que 80 % des ions hypophosphites et des ions orthophosphites traversent vers le compartiment (4).

Pour la deuxième phase de séparation, la solution issue du compartiment (4) de la première phase de séparation est introduite dans le compartiment (12) (le transfert de cette solution est représenté en trait pointillé à la figure 1). La solution issue du compartiment (2) de la première phase de séparation est introduite dans le compartiment (14) (le transfert de cette solution est représenté en trait pointillé à la figure 1). Lors de cette phase de séparation, les ions $H_2PO_2^{--}$ et $RCOO^-$ d'une part, et $Na^+$ d'autre part dont le mouvement est initié par l'application d'un champ électrique aux électrodes A et C, traversent du compartiment (12) vers le compartiment (14) par l'entremise respectivement de membranes MEA- et MEC. La membrane MEA- permet, en effet, de séparer les composés anioniques monovalents des composés anoniques plurivalents en se laissant traverser par les premiers. Ainsi, les hypophosphites $H_2PO_2^-$ et les ions $RCOO^-$ traversent ladite membrane MEA-, sous l'effet notamment du champ électrique appliqué, et se retrouvent alors dans le compartiment (14).

La membrane MEC permet elle de séparer les cations des anions par transfert sélectif des cations.

A la fin de cette deuxième phase de séparation, il reste dans le compartiment (12) une solution contenant environ 10 % de $Ni^{2+}$, 12 % d'ions hypophosphites et 66 % d'ions orthophosphites. Parallèlement, la solution obtenue dans le compartiment (14) qui correspond au bain de nickel chimique régénéré, comprend donc environ 90 % des ions $Ni^{2+}$, 88 % des ions hypophosphites, et environ 34 % des ions orthophosphites, du bain de nickel chimique initial.

Ensuite, la solution d'ions $Ni^{2+}$ ayant été récupérée du compartiment (2) est mélangée à la solution d'ions hypophosphites récupérés dans le compartiment (14) pour la confection d'un bain de nickel chimique régénéré.

Par ailleurs, le procédé de régénération selon l'invention peut être également mis en oeuvre en continu par un dispositif comportant trois compartiments, tel que celui représenté à la figure 2.

Dans un tel dispositif, un premier compartiment central (24) est délimité par deux membranes échangeuses d'ions, l'une échangeuse d'anions MEA- (27), spécifique d'ions monovalents par rapport aux ions divalents, l'autre échangeuse de cations MEC+ (21), spécifique des ions monovalents par rapport aux ions divalents. De part et d'autre du compartiment central (24) deux compartiments (22) et (26) sont prévus. Le premier est délimité par une anode « A » et la membrane échangeuse d'anions spécifique d'ions monovalents, le deuxième étant délimité par une cathode « C » et la membrane échangeuse de cations spécifique d'ions monovalents. Le compartiment (22) délimité par la cathode et la membrane échangeuse de cations monovalents permet de recevoir le bain usé à traiter (3). En outre, le compartiment (26) communique avec le compartiment (22), de façon à ce que les composés anioniques monovalents, essentiellement les hypophosphites $H_2PO_2^{--}$ soient au fur et à mesure transférés du premier compartiment au deuxième. Enfin, au niveau du compartiment central, il est prévu de réaliser un traitement physico-chimique, afin de détruire les orthophosphites $H_2PO_3^{--}$ s'accumulant au cours du processus.

Dans un mode de réalisation en continu d'un procédé de régénération selon l'invention, on introduit dans le compartiment (22) le bain de nickel chimique comprenant essentiellement les hypophosphites, les orthophosphites et les ions $Ni^{2+}$.

Les anions sont tout d'abord séparés des cations pour être ensuite transférés vers un deuxième compartiment (24). Dans ce dernier, est prévue une régulation de pH comprise entre 9 et 9,5 permettant de créer une différence de

valence entre composés anioniques, notamment entre les hypophosphites et les orthophosphites. De la sorte, les orthophosphites $HPO_3^{--}$ peuvent être, au fur et à mesure de la séparation, éliminés du compartiment (24), alors que les hypophosphites sont dans le même temps transférés vers un compartiment (26). Enfin, par l'intermédiaire d'un moyen de transfert (28), ces hypophosphites sont transférés vers le compartiment (22) pour un nouveau cycle de séparation.

Plus particulièrement du point de vue des flux membranaires, les ions $Ni^{2+}$ sont, dans un tel procédé continu, séparés des ions hypophosphites et orthophosphites par l'intermédiaire d'une membrane échangeuse de cations (21) monovalents MEC+. Les ions hypophosphites et orthophosphites ayant traversé ladite membrane, du compartiment (22) vers le compartiment (24), subissent eux-mêmes une séparation grâce à l'application d'un pH dont la valeur est comprise entre 9 et 9,5. En effet, ces conditions de pH permettent ainsi que ci-dessus indiqué, de créer une différence de valence entre les hypophosphites et les orthophosphites et provoquent la précipitation de ces derniers. Une membrane échangeuse d'anions monovalents (27) permet alors le transfert des hypophosphites vers le compartiment (26) duquel lesdits hypophosphites seront transférés vers le compartiment (22) pour un nouveau cycle de séparation.

La valeur du rapport orthophosphite/hypophosphite dans le compartiment (22) décroît en fonction du nombre de cycle de régénération mis en oeuvre, la teneur en hypophosphites restant pratiquement constante durant toute la durée du cycle de régénération. Ainsi, tel que ci-dessus mentionné, on répète l'opération jusqu'à l'obtention d'un nombre de MTO au moins égal à 3, de préférence 1 MTO.

Exemple de régénération d'un bain de nickel chimique usé pour la mise en oeuvre d'un procédé discontinu

A] Dosage des constituants après la première électrodialyse

Un bain de nickel chimique usé comprenant 3,34 g/l d'ions nickel $Ni^{2+}$, 26,1 g/l d'hypophosphites et 282 g/l d'orthophosphites est introduit dans le compartiment (2) d'une cellule d'électrodialyse (Tableau I). Parallèlement, une solution contenant 2 g/l de $Na_2SO_4$ est introduite dans le compartiment « saumure » (2). On applique à la solution un courant correspondant à une densité de courant d'environ 35 $mA/cm^2$ de membrane échangeuse d'ions à la température ambiante et à un pH environ égal à 4.

| t = 0 | compartiment (2) | compartiment (4) |
|---|---|---|
| $Ni^{2+}$ | 3,34 g/l (33,4 g) | 0 g/l |
| Hypophosphites | 26,1 g/l (261 g) | 0 g/l |
| Orthophosphites | 282 g/l (2820 g) | 0 g/l |

Tableau I

Après une période d'environ 165 minutes, on mesure les différentes concentrations dans les différents compartiments. A l'issue de la première électrodialyse, les résultats obtenus en grammes par litre (et en masse) au bout de 165 minutes, et pour 10 litres de solution initiale dans chaque compartiment, sont représentés dans le Tableau II suivant :

| t = 165 mn | compartiment (2) | compartiment (4) |
|---|---|---|
| $Ni^{2+}$ | 4,76 g/l (23,8 g) | 230 mg/l (3,45 g) |
| Hypophosphites | 4,24 g/l (21,2 g) | 14,17 g/l (212,55 g) |
| Orthophosphites | 61 g/l (305 g) | 164,16 g/l (2462,4 g) |

Tableau II

B] Dosage des constituants après la deuxième électrodialyse

Une deuxième électrodialyse est effectuée sur une solution de composition ionique semblable à celle de la solution issue de la première électrodialyse (tableau III).

| t=0 | compartiment (12) | compartiment (14) |
|---|---|---|
| $Ni^{2+}$ | 210 mg/l | 0 |
| Hypophosphites | 12,45 g/l | 0 |
| Orthophosphites | 144,7 g/l | 0 |

Tableau III

Les résultats obtenus dans les compartiments (12) et (14) au bout de 100 minutes sont présentés au tableau IV suivant :

| t=100 | compartiment (12) | compartiment (14) |
| --- | --- | --- |
| $Ni^{2+}$ | 241 mg/l | 47,5 mg/l |
| Hypophosphites | 1,85 g/l | 18,5 g/l |
| Orthophosphites | 119,3 g/l | 59,4 g/l |

Tableau IV

Les volumes des compartiments à t = O sont chacun de 10 litres. En fin d'électrodialyse, c'est à dire au bout de 165 minutes de réaction, le volume du contenu du compartiment (12) est de 5 litres, le volume du contenu du compartiment (14) est de 15 litres environ.

**Revendications**

1. Procédé de régénération d'un bain de nickel usé contenant des composés anioniques et des composés cationiques notamment des orthophosphites $H_2PO_3^{--}$ des hypophosphites $H_2PO_2^-$, et des ions $Ni^{2+}$ caractérisé en ce qu'il comprend,

   une première phase de séparation de composés au cours de laquelle une quantité substantielle des composés anioniques en solution dans ledit bain est séparée des composés cationiques dans des conditions permettant en outre le maintien en solution d'une quantité optimale d'ions $Ni^{2+}$,
   une deuxième phase de séparation de composés au cours de laquelle une quantité substantielle des composés anioniques monovalents, compris dans les composés anioniques séparés des composés cationiques lors de la première phase du procédé, est séparée des composés anioniques plurivalents par la création d'une différence de valence entre ces composés, particulièrement par l'application d'un pH permettant de créer cette différence de valence.

2. Procédé selon la revendication 1, caractérisé en ce que la première et/ou la deuxième phase de séparation comprend une phase d'électrodialyse mise en oeuvre par l'entremise d'au moins une cellule d'électrodialyse.

3. Procédé selon la revendication 1 ou 2, caractérisé en ce que

   la première phase de séparation comprend la mise en oeuvre d'au moins une cellule d'électrodialyse comprenant une membrane échangeuse d'anions, de sorte à permettre la séparation d'une quantité substantielle des composés ortho- et hypophosphites, sous forme prédominante monovalente, des ions $Ni^{2+}$, et en ce que la deuxième phase comprend la mise en oeuvre d'au moins une cellule d'électrodialyse comprenant une membrane échangeuse d'anions spécifique des ions monovalents, de sorte à permettre la séparation d'une quantité substantielle des composés orthophosphites sous forme prédominante divalente, des composés hypophosphites.

4. Procédé de régénération selon la revendication 3, caractérisé en ce que

chaque cellule d'électrodialyse mise en oeuvre dans la première phase de séparation comprend une membrane échangeuse de cations spécifique des ions monovalents, et en ce que
chaque cellule d'électrodialyse mise en oeuvre dans la deuxième phase de séparation comprend une membrane échangeuse de cations.

**5.** Procédé selon l'une quelconque des revendications 1 à 4, caractérisé en ce que

lors de la première électrodialyse, on applique une densité de courant comprise dans l'intervalle allant de 20 à 60 $mA/cm^2$ d'une membrane échangeuse d'ions, de préférence 35, une température choisie dans l'intervalle allant de 20 à 40 °C,
et en ce que lors de la deuxième électrodialyse on applique une densité de courant comprise dans l'intervalle allant de 20 à 60 $mA/cm^2$ d'une membrane échangeuse d'ions, de préférence 30, une température choisie dans l'intervalle allant de 20 à 60 ° C et une valeur de pH comprise entre 9 et 9,5.

**6.** Procédé selon la revendication 5, caractérisé en ce que lors de la première électrodialyse, on règle le pH à une valeur inférieure à 8, de préférence comprise entre 4 et 5.

**7.** Procédé selon la revendication 1, caractérisé en ce qu'il est mis en oeuvre par l'introduction au fur et à mesure, dans le bain de nickel chimique en cours de régénération, des composés anioniques monovalents séparés lors de la deuxième phase de séparation des composés anioniques plurivalents, notamment les orthophosphites .

**8.** Procédé selon la revendication 7, caractérisé en ce que les composés anioniques monovalents sont séparés des composés anioniques plurivalents lors de la deuxième phase de séparation par l'application d'un pH compris entre 9 et 9,5.

**9.** Procédé selon la revendication 7 ou 8, caractérisé en ce qu'il est mis en oeuvre en continu jusqu'à l'obention d'un nombre de MTO au moins égal à 3, de préférence 1 MTO.

FIGURE 1

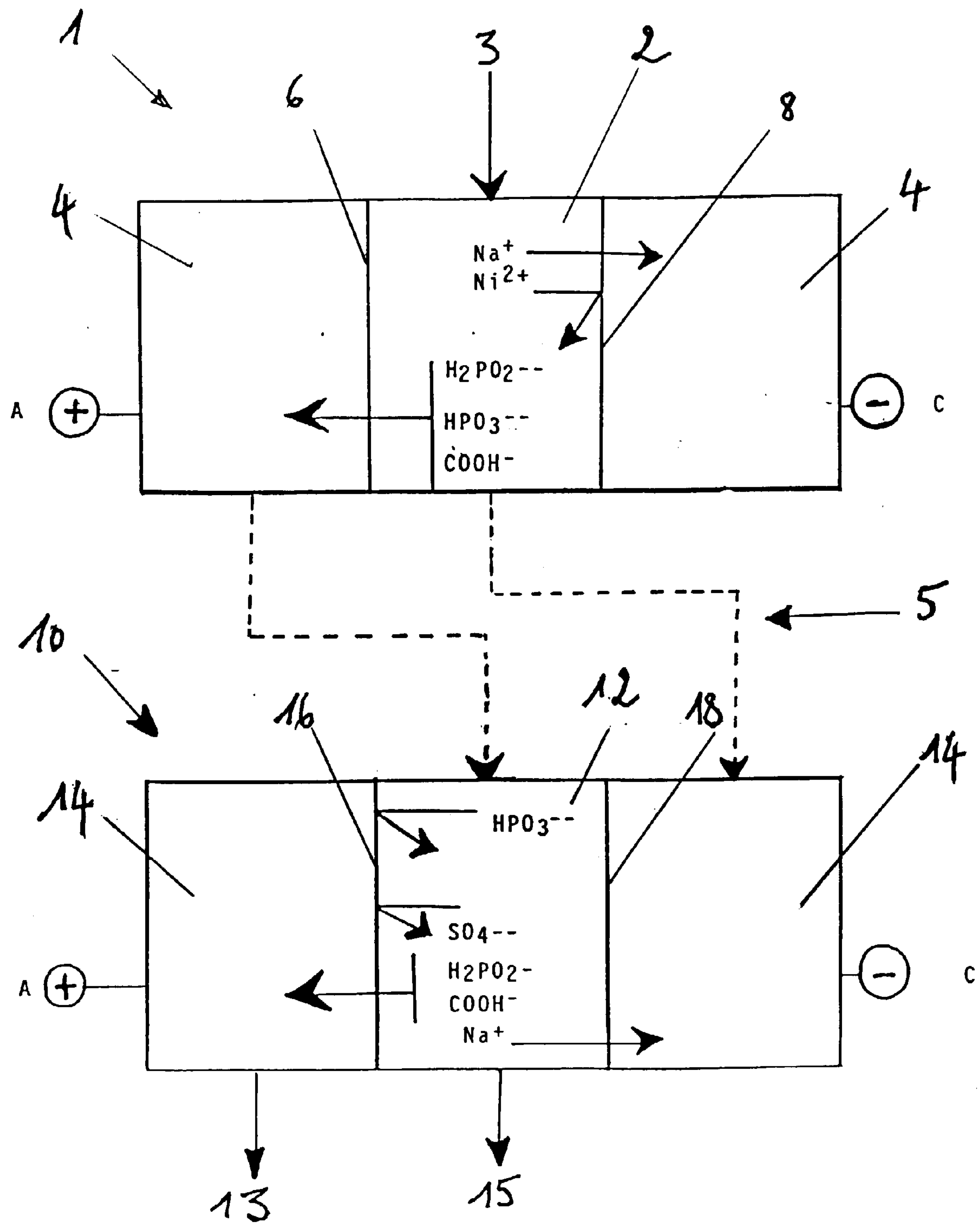
1
3
2
6
8
4
4
Na+
Ni2+
H2PO2--
HPO3--
COOH-
A
C
5
10
16
12
18
14
14
HPO3--
SO4--
H2PO2-
COOH-
Na+
A
C
13
15

FIGURE 2

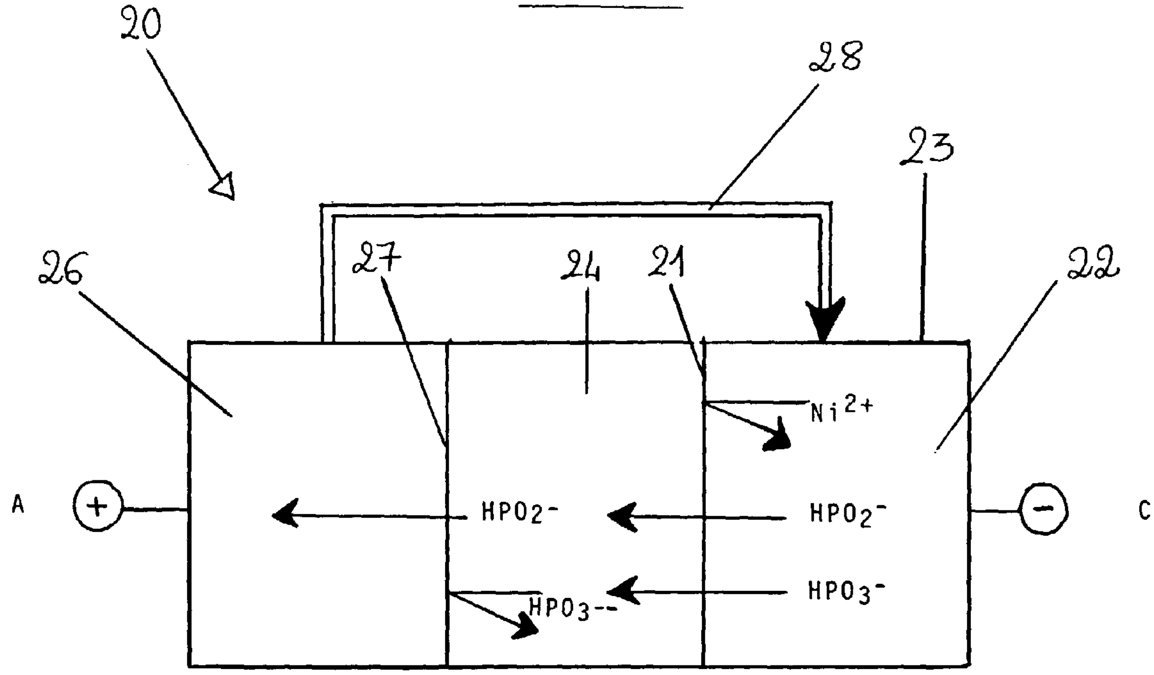

Office européen des brevets

# RAPPORT DE RECHERCHE EUROPEENNE

Numero de la demande
EP 97 40 0233

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US 5 419 821 A (VAUGHAN DANIEL J) 30 Mai 1995<br>* figure 2 *<br>--- | 1-4 | C23C18/16<br>B01D61/44 |
| X | DE 43 10 366 C (FRAUNHOFER GES FORSCHUNG) 13 Octobre 1994<br>* revendication 9 *<br>----- | 1-4 | |

DOMAINES TECHNIQUES RECHERCHES (Int.Cl.6)
C23C
B01D

Le présent rapport a été établi pour toutes les revendications

| Lieu de la recherche | Date d'achèvement de la recherche | Examinateur |
|---|---|---|
| LA HAYE | 11 Avril 1997 | Van Leeuwen, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)